(19) Europäisches Patentamt
European Patent Office
Office européen des brevets

(11) **EP 3 542 234 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **17804438.4**

(22) Anmeldetag: **07.11.2017**

(51) Internationale Patentklassifikation (IPC):
**G05B 19/401** (2006.01)    **G05B 19/404** (2006.01)

(52) Gemeinsame Patentklassifikation (CPC):
**G05B 19/401;** G05B 19/404; G05B 2219/50328

(86) Internationale Anmeldenummer:
**PCT/EP2017/001288**

(87) Internationale Veröffentlichungsnummer:
**WO 2018/091130 (24.05.2018 Gazette 2018/21)**

(54) **VERFAHREN ZUR BESTIMMUNG DER ACHSLAST AUF LINEAR- UND RUNDACHSEN**

METHOD FOR DETERMINING THE AXLE LOAD ON LINEAR AND ROUND AXLES

PROCÉDÉ DE DÉTERMINATION DE LA CHARGE AXIALE SUR DES AXES LINÉAIRES ET RONDS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2016 DE 102016013890**

(43) Veröffentlichungstag der Anmeldung:
**25.09.2019 Patentblatt 2019/39**

(73) Patentinhaber: **Rheinisch-Westfälische Technische Hochschule (RWTH) Aachen**
**52062 Aachen (DE)**

(72) Erfinder:
• **FEY, Marcel**
**52249 Eschweiler (DE)**
• **EPPLE, Alexander**
**35614 Asslar-Berghausen (DE)**
• **KEHNE, Sebastian**
**52064 Aachen (DE)**
• **BRECHER, Christian**
**52074 Aachen (DE)**

(74) Vertreter: **Kohl, Karl-Heinz Patentanwälte Dipl.-Ing. A.K. Jackisch-Kohl Dipl.-Ing. K.H. Kohl Stuttgarter Strasse 115 70469 Stuttgart (DE)**

(56) Entgegenhaltungen:
EP-A1- 2 481 941        DE-A1- 10 029 965
DE-A1-102009 054 631    JP-A- 2009 061 571
US-A1- 2013 111 981

• **Anonymous: "Stiffness - Wikipedia", , 29. Januar 2018 (2018-01-29), XP55445500, Gefunden im Internet: URL:https://en.wikipedia.org/wiki/Stiffnes s [gefunden am 2018-01-29]**

EP 3 542 234 B1

**Beschreibung**

Die Erfindung betrifft ein Verfahren zur Bestimmung von Lasten auf Linear- und Rundachsen (Achslasten) nach dem Oberbegriff des Anspruches 1.

Durch geeignete Methoden können diese Achslasten hinsichtlich geometrischer und thermischer Einflüsse korrigiert werden.

Die ermittelten Achslasten bieten eine wichtige Informationsquelle für Anwendungen im Bereich Condition Monitoring und Prozessüberwachung. Ein weiterer möglicher Anwendungsbereich ist die Bestimmung der Prozesskraft bei der spanenden oder umformenden Bearbeitung von Werkstücken mittels eines Werkzeuges. Hierbei können aktuell Prozesskräfte nur mit empfindlicher und teurer Messtechnik nahe an der Bearbeitungsstelle gemessen werden. Hierfür sind z. B. Kraftmessplattformen, Werkzeugaufnahmen mit Kraftmesser und Kraftmessdosen bekannt, die nur begrenzt industrietauglich sind.

Durch geeignete Methoden kann die Prozesskraft auf Basis der identifizierten Achslasten berechnet werden. Wenn hierbei auf maschineninterne Sensorik zurückgegriffen wird, ist dieses Vorgehen wesentlich kostengünstiger.

Es ist bekannt, Achslasten indirekt über das Motormoment des Antriebsmotors zu ermitteln. Die Messgröße ist hierbei der Motorstrom, der in ein Motormoment umgerechnet werden muss. Hierfür sind jedoch detaillierte Informationen zur Regelung und zum Aufbau des Antriebsmotors notwendig, die nicht immer in ausreichender Tiefe zur Verfügung stehen. Darüber hinaus wirkt der Antriebsmotor mit Regelung als Tiefpassfilter (Trägheitsmoment, Aufbau eines elektrischen Feldes und dergleichen), so dass geringe und hochfrequente Achslasten nicht (genau) ermittelt werden können. Nachteilig ist außerdem die messtechnische Ermittlung des Motorstroms. Sie erfolgt in der Regel über das Auslesen maschineninterner Bussysteme. Solche Lösungen sind jedoch vom Hersteller der Steuerung abhängig und mit Kosten verbunden.

Es ist bekannt (DE 10 2009 054 631 A1), thermisch bedingte Positionsänderungen eines Werkzeugmaschinenabschnittes zu bestimmen und zu kompensieren. Mit zwei Messeinrichtungen werden ein erster und ein zweiter Positionswert des Werkzeugmaschinenabschnittes erfasst. Beide Positionswerte werden miteinander verglichen. Aus dem Vergleich wird die thermisch bedingte Änderung der Ortsposition bestimmt. Störeinflüsse werden durch eine Tiefpassfilterung herausgefiltert.

Weiter ist es bekannt (EP 2 481 941 A1), die Axialbelastung von Lagern zu erfassen, mit denen eine Hauptspindel drehbar abgestützt wird.

Der Erfindung liegt die Aufgabe zugrunde, das gattungsgemäße Verfahren so auszubilden, dass die Achslasten und im weiteren Sinne die Prozesskräfte bei der Bearbeitung von Werkstücken einfach, kostengünstig, herstellerunabhängig und dennoch genau erfasst werden können.

Diese Aufgabe wird beim gattungsgemäßen Verfahren erfindungsgemäß mit den kennzeichnenden Merkmalen des Anspruches 1 gelöst.

Beim erfindungsgemäßen Verfahren werden externe Lasten, die auf eine Linear- oder Rundachse mit zwei Positionsmesssystemen (z. B. indirektes und direktes Positionsmesssystem) wirken, identifiziert. Hierfür werden zunächst die Messgrößen beider Positionsmesssysteme ($MG_{direkt\ MS}$ und $MG_{in\text{-}direktesMS}$) auf dieselbe physikalische Einheit umgerechnet. Die Umrechnung erfolgt über den Umrechnungsfaktor UF. Aus diesen beiden Werten wird eine Differenz $\Delta x$ gebildet.

$$\Delta x = MG_{direkt\ MS} - UF^* MG_{indirektesMS}$$

Wird diese Differenz mit der positionsabhängigen Steifigkeit $k\ (x_{Pos})$ der Antriebskinematik zwischen den beiden Messstellen multipliziert, erhält man unter Idealbedingungen die aktuelle Kraft $F_{Achslast}$, die in Achsrichtung auf die Achse wirkt:

$$F_{Achslast} = \Delta x^* k\ (x_{Pos})$$

Geometrische und thermische Einflüsse können durch geeignete Methoden korrigiert werden.

$$\Delta x_{korrigiert} = \Delta x + [Korrekturwerte\ (Position,\ Verfahrrichtung,\ Zeit)]$$

Auf Basis der identifizierten Achslasten ist es dann z. B. möglich, Rückschlüsse auf die Prozesskräfte oder die Kräfte auf die Maschinenelemente zu schließen. Somit bieten die ermittelten Achslasten eine wichtige Informationsquelle für Anwendungen im Bereich Condition Monitoring und Prozessüberwachung.

Das beschriebene Verfahren ist auf verschiedene Linear- und Rundachsbauformen anwendbar. Mögliche Bauformen sind beispielsweise Achsen mit Kugelgewindetrieb, Zahnstange-Ritzel-Antrieb sowie Rundachsen mit Stirnradgetriebe oder Schneckengetriebe. Diese Beispiele sind nicht einschränkend zu verstehen.

Beim erfindungsgemäßen Verfahren sind aufwändige softwaretechnische Lösungen zur Anbindung an ein Bussystem der Werkzeugmaschine nicht erforderlich. Die Ermittlung der Positionsdaten kann vorteilhaft durch Abgreifen analoger Signale direkt am Positionsmesssystem erfolgen.

Das Verfahren ist auch unabhängig von dem Hersteller der Steuerung bzw. Regelung. Mit dem erfindungsgemäßen Verfahren lassen sich die Achslasten mit deutlich höherer Genauigkeit ermitteln als mit den bestehenden Lösungen mit maschineninternen Daten.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1    in schematischer Darstellung eine Vorrichtung zur Durchführung des erfindungsgemäßen Verfahrens,

Fig. 2    in einem Diagramm die Steifigkeit für die X- und die Y-Achse zum Einmessen der Steifigkeit der Antriebskinematik,

Fig. 3    eine Hysteresekurve zur Ermittlung des Spiels,

Fig. 4    in einem Diagramm die Kompensation von v2$\pi$- und Steigungsfehlern,

Fig. 5    in schematischer Darstellung einen Teil eines Werkstückes, in das mit einem Werkzeug eine Nut gefräst ist,

Fig. 6    die Verfahrkurve der X-Achse des Werkzeugs in Abhängigkeit von der Zeit,

Fig. 7    die Verfahrkurve der Y-Achse des Werkzeugs in Abhängigkeit von der Zeit,

Fig. 8    die Validierung der Methode für Prozesskräfte in X-Richtung,

Fig. 9    die Validierung der Methode für Prozesskräfte in Y-Richtung.

Mit der im Folgenden beschriebenen Vorrichtung und Verfahrensweise ist es möglich, externe Lasten zu identifizieren, die beispielsweise auf eine Linearachse, angetrieben über einen Kugelgewindetrieb, wirken.

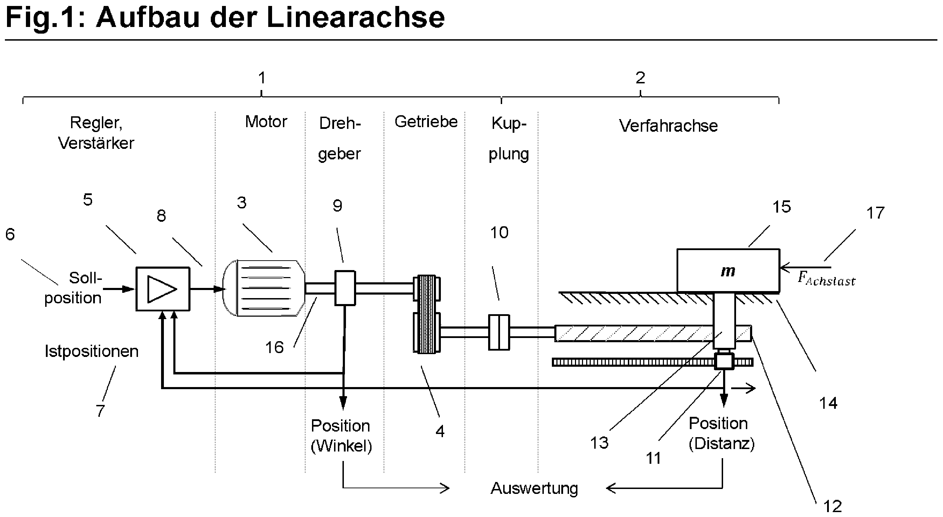

Fig. 1 zeigt schematisch eine Linearachse mit einem Antrieb 1 für einen Kugelgewindetrieb 12 und 13, der einen Schlitten 15 linear verfährt. Der Antrieb 1 hat einen Motor 3 mit Drehgeber 9, ggf. ein Getriebe 4, ggf. Kupplungen 10, die sich zwischen Getriebe 4, Drehgeber 9 und Kugelgewindetrieb 12, 13 befinden können, und eine Regelung mit Verstärker 5. In Fig. 1 ist zwischen dem Kugelgewindetrieb 12, 13 und dem Getriebe 4 eine Kupplung 10 vorgesehen. Der Motor 3 kann ein Elektromotor, ein Hydraulikmotor oder ein pneumatisch angetriebener Motor sein. Die Motorwelle 16 ist im Bild beispielhaft über das Getriebe 4 mit dem einem Ende einer Kugelrollspindel 12 des Kugelgewindetriebes 12, 13 antriebsverbunden. Sie ist drehbar gelagert und trägt eine Spindelmutter 13, die je nach Drehrichtung der Kugelrollspindel 12 auf ihr verschoben wird. Die Spindelmutter 13 ist gegen Drehen gesichert, so dass sie durch die drehende, axial feststehende Kugelrollspindel 12 längs der Kugelrollspindel verschoben wird. Über die Spindelmutter 13 ist der Kugelgewindetrieb 12, 13 mit dem Schlitten 15 antriebsverbunden, der längs einer Führung 14 verschiebbar ist. Die Baugruppe bestehend aus dem Schlitten 15, den Führungen 14 und dem Kugelgewindetrieb 12, 13 wird im Folgenden als Verfahrachse 2 bezeichnet.

Die Regelung 5, als Bestandteil einer Steuerung, erhält Soll-Signale 6 in Bezug auf die jeweilige erforderliche Position des Schlittens 15. Die Regelung 5 erhält außerdem Ist-Signale 7. Die einen Ist-Signale 7 werden von einem direkten Positions- bzw. Wegmesssystem 11 geliefert, das vorteilhaft als Linearmaßstab ausgeführt ist. Dieses Positionsmesssystem 11 kennzeichnet die tatsächliche Ist-Position des Schlittens 15.

Die anderen Ist-Signale 7 werden von einem indirekten Positions- bzw. Wegmesssystem geliefert, das vorteilhaft der Drehgeber 9 ist. Mit ihm wird die aktuelle Drehlage der Motorwelle 16 des Motors 3 gekennzeichnet.

Die Ist-Signale 7 der beiden Positionsmesssysteme 9, 11 kennzeichnen die Ist-Position des Schlittens 15.

Wenn die Ist-Position von der Soll-Position abweicht, erzeugt die Regelung 5 ein Regelsignal 8, das dem Motor 3 zur Korrektur der Ist-Position zugeführt wird.

Mit mehreren dieser Linearachsen kann beispielhaft in einer Werkzeugmaschine ein Werkzeug in mehreren Achsen relativ zu einem Werkstück verfahren und positioniert werden. Während der Werkstückbearbeitung treten Prozesskräfte auf, die anteilig auf die Linearachsen bzw. auf den Kugelgewindetrieb 12, 13 in Form von Achslasten 17 wirken.

Um diese Achslasten 17 zu identifizieren, werden zunächst die Messwerte (Winkel in Grad) des indirekten Positionsmesssystems 9, in diesem Fall des Drehgebers, in bekannter Weise in die physikalische Einheit (Position in Meter) des direkten Positionsmessystems, in diesem Fall des Linearmaßstabs 11, umgerechnet. Aus beiden Werten wird dann eine Differenz gebildet:

$$\Delta x = x_{\text{direkt MS}} - \frac{\phi_{\text{indirektes MS}}}{2\pi} \cdot h_{\text{Steigung KGT}}$$

Hierbei ist $\Delta x$ die Differenz in m, $x_{\text{direkt MS}}$ die Messgröße des direkten Positionsmesssystems 11 (Linearmaßstab) in m, $\varphi_{\text{indirektes MS}}$ die Messgröße des indirekten Positionsmesssystems 9 (Drehgeber) in rad und $h_{\text{Steigung KGT}}$ die Steigung der Kugelrollspindel 12 des Kugelgewindetriebes 12, 13 in m/Umdr.

Vorteilhaft wird die so ermittelte Differenz mit der positionsabhängigen Steifigkeit k ($x_{\text{Pos}}$) der Antriebskinematik multipliziert, die das gesamte System im Bereich zwischen den beiden Messstellen 9, 11 hat. Unter Idealbedingungen ergibt sich hieraus diejenige aktuelle Achslast 17, die auf die Linearachse wirkt.

$$F_{\text{Achslast}} = \Delta x \cdot k \, (x_{\text{Pos}})$$

Die positionsabhänige Steifigkeit k ($x_{\text{Pos}}$) kann entweder über eine direkte Messung der Steifigkeit oder aber durch geeignete Verfahrprofile ermittelt werden.

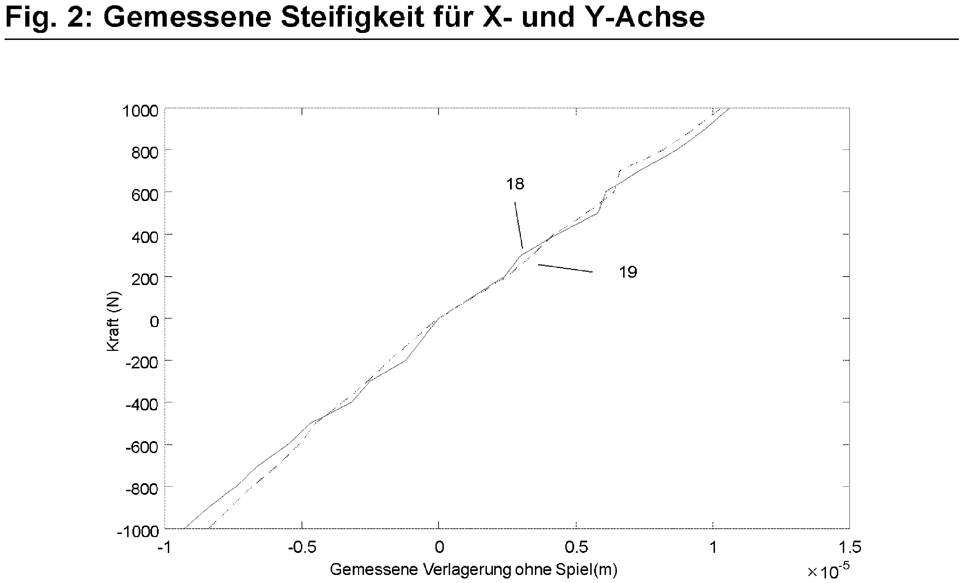

Fig. 2 zeigt die eingemessene Steifigkeitskennlinien 18 und 19 für eine X- und eine Y-Achse in einer Werkzeugmaschine in einer Position. Erkennbar ist, dass in Abhängigkeit von der Höhe der Achslast eine entsprechende Verlagerung in den Achsen erfolgt. In Fig. 2 ist das Spiel in der Kinematik nicht berücksichtigt.

Die Steifigkeit der gesamten Kinematik kann sich über deren Lebensdauer ändern. Beispielsweise tritt mit zunehmender Lebensdauer des Kugelgewindetriebes ein Vorspannungsverlust der Spindelmutter 13 auf. Daher muss die Änderung der Steifigkeit der Antriebskinematik vorteilhaft in regelmäßigen Abständen durch ein neues Einmessen angepasst werden.

Geometrische und thermische Einflüsse können die Kraftmessung ebenfalls beeinflussen und vorteilhaft durch geeignete Methoden, wie z.B. durch Korrekturwerte, berücksichtigt werden. Diese Korrektur wird im Folgenden beispielhaft beschrieben.

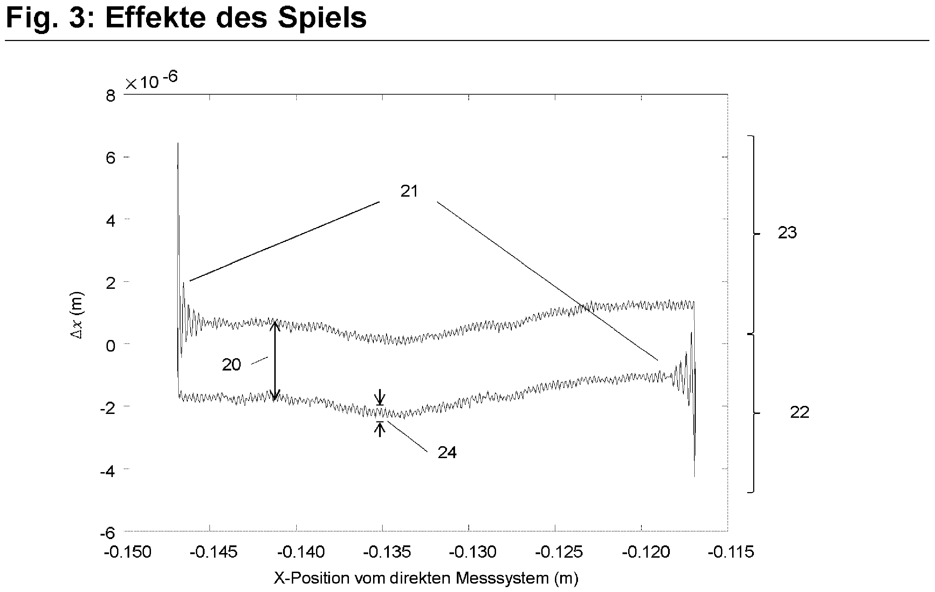

Ein Faktor ist das Spiel in der Kinematik. Dieses Spiel ändert sich nicht über die Zeit und ist nur von der aktuellen Position der Verfahrachse 2 (Fig. 1) bzw. der Bewegungsrichtung der Verfahrachse abhängig. Die Korrektur des Spiels kann über Referenzfahrten aufgenommen werden. Beispielhaft zeigt Fig. 3 das Ergebnis einer solchen Referenzfahrt. In Fig. 3 ist der Differenzwert $\Delta x$ gegen die X-Position des direkten Positionsmesssystems 11 aufgetragen. Das Spiel der Kinematik wird durch den Hystereseverlauf der Differenzkurve charakterisiert. Der obere Teil 23 steht für eine Bewegung in positiver X-Richtung und der untere Teil 22 für eine Bewegung in negativer X-Richtung. Im eingeschwungenen Zustand, also außerhalb der Bereiche 21, ist das Spiel die Differenz 20 zwischen den beiden Differenzkurven.

Ein weiterer Faktor sind die zeitlich konstanten, achspositionsabhängige, nicht linearen Wegschwankungen ($v2\pi$-Fehler), bezogen auf eine Umdrehung der Kugelrollspindel 12 infolge von Fertigungsungenauigkeiten der Kugelrollspindel 12. Auch dieser Wert ändert sich mit der Zeit nicht und kann als Korrekturwert in einer Referenzfahrt hinterlegt werden. Um diesen Faktor zu erfassen, wird ebenfalls beispielhaft eine unbelastete Referenzfahrt durchgeführt und hierbei die entsprechenden Korrekturwerte über die Achspositionen aufgenommen. In Fig. 3 ist dies beispielhaft mit 24 verdeutlicht.

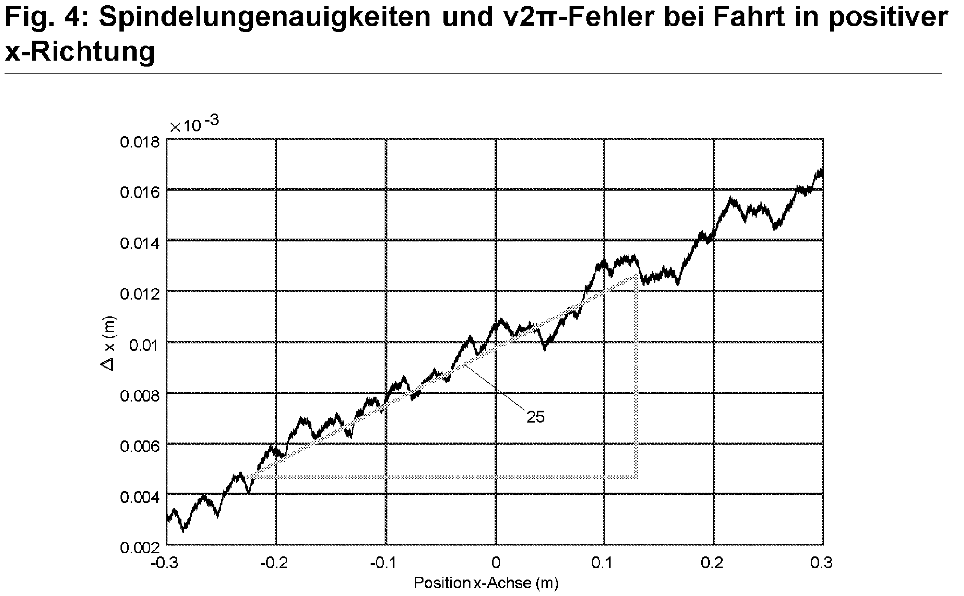

Als weiterer Korrekturfaktor sind zeitlich konstante lineare Wegschwankungen zu berücksichtigen, die bei mehreren Umdrehungen der Kugelrollspindel 12 infolge von Fertigungsungenauigkeiten auftreten (Steigungsfehler). Da sich diese Wegschwankungen nicht mit der Zeit ändern, können sie ebenfalls beispielsweise durch die unbelastete Referenzfahrt erfasst und als Korrekturwerte hinterlegt werden, wie das Steigungsdreieck 25 in Fig. 4 verdeutlichen soll. In Fig. 4 ist der Differenzwert $\Delta x$ gegen die Position der X-Achse aufgetragen.

Als weiterer zu berücksichtigender Effekt sind zeitlich variable lineare Wegschwankungen anzusehen, bezogen auf mehrere Umdrehungen der Kugelrollspindel 12, die z. B. aufgrund thermischer Längenänderungen entstehen. Da im Einsatz der Werkzeugmaschine sowie bei der Werkstückbearbeitung in die Kugelrollspindel 12 Wärme eingeleitet wird, längt sich die Kugelrollspindel 12. Dieser Einfluss ist zeitlich variabel. Es ist daher von Vorteil, diesen Korrekturwert in regelmäßigen Zeitabständen anzupassen. Der benötigte Korrekturwert verhält sich linear zur Position der Verfahrachse 2.

Auf Basis der in diesem Verfahren beschriebenen Ermittlung von externen Lasten auf Verfahrachsen kann mit Hilfe vorteilhafter Reibungs-, Inertialkraft- und Kinematikmodellen des Maschinensystems ausgehend von der korrigierten Achslast auf eine aktuell wirkende Prozesslast am Tool Center Point geschlossen werden. Als Tool Center Point (TCP) wird der Mittelpunkt des Werkzeuges definiert, auf den die Steuerung bzw. Regelung des Werkzeuges eingestellt wird. Auch diese Modelle müssen vorteilhaft parametriert werden.

Zur Erläuterung der Wirksamkeit des Verfahrens wurden auf einer Werkzeugmaschine während eines Fräsprozesses die Prozesskräfte mit einer Kraftmessplattform aufgenommen.

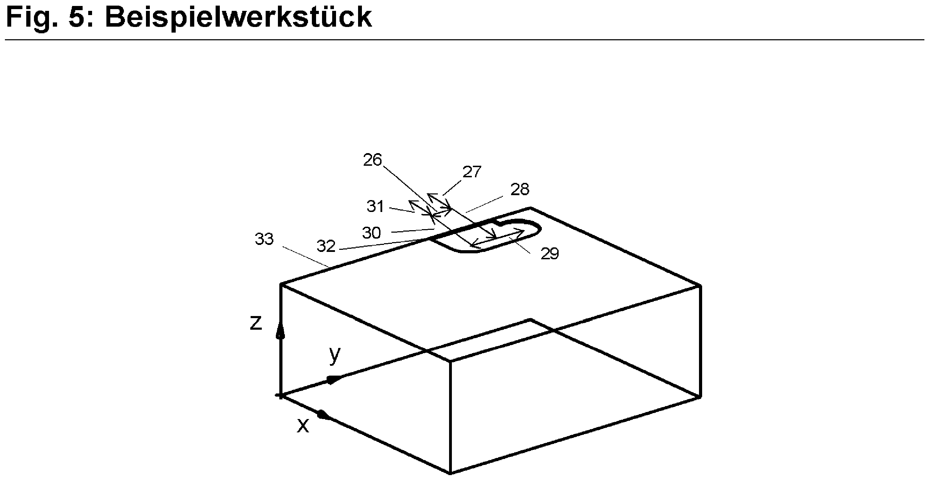

In Fig. 5 ist beispielhaft ein Werkstück 33 dargestellt, in das mit einem (nicht dargestellten) Werkzeug eine Nut 32 gefräst ist. Mit den Bewegungspfeilen in der Detailansicht der Nut 32 wird veranschaulicht, wie das Werkzeug beim Fräsen der Nut 32 bewegt wird. Das Werkzeug ist in diesem Falle ein Schaftfräser, der um seine Achse drehbar angetrieben und in X- sowie in Y-Richtung mit den entsprechenden X- und Y-Achsen bewegt wird. Das Werkzeug befindet sich zunächst außerhalb des Werkstückes 33 und wird dann in Y- und X-Richtung in Richtung der Bewegungspfeile 26 und 27 angefahren und über die Bewegung 28 in das Werkstück 33 bewegt. Anschließend wird das Werkzeug in Y-Richtung zunächst in Fig. 5 nach oben und anschließend nach unten bewegt (Bewegungspfeil 29). Schließlich wird das Werkzeug in Richtung des Bewegungspfeiles 30 so weit in X-Richtung verfahren, bis es sich wieder außerhalb des Werkstückes 33 befindet. Zur Ermittlung des Spiels wird wie bei der Bewegung 27 auch in Bewegung 31 die X-Achse vor- und zurückgefahren.

Dieses anhand von Fig. 5 beschriebene Verfahrprofil des Werkzeuges ist nur als Beispiel zu verstehen. Am Werkstück 33 lassen sich unterschiedlichste Bearbeitungen vornehmen, die unterschiedlichste Bewegungen des Werkzeuges erfordern. Auch die Herstellung der Nut 32 ist nur als Beispiel zu verstehen. Am Werkstück 33 können auch andere Fräsarbeiten vorgenommen werden. Auch ist es möglich, Bohroperationen am Werkstück 33 durchzuführen. Alternativ lässt sich das vorgestellte Verfahren auch auf andere spanende und nicht spanende Verfahren anwenden, z. B. Dreh- und Schleifoperationen oder umformende Verfahren.

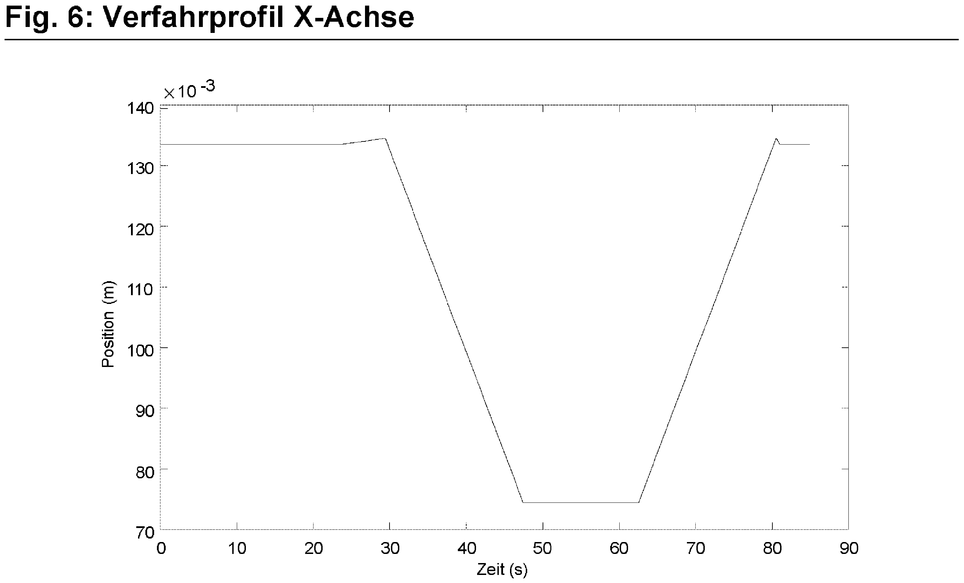

Die mit der Kraftmessplattform gemessenen Prozesskräfte sowie die dazugehörigen Verfahrprofile sind in den Fig. 6 bis 9 für die X- und Y- Richtung dargestellt. Gleichzeitig wurden die Signale des Drehgebers 9 und des Linearmaßstabs 11 der X- und Y- Achse aufgenommen und mit dem hier beschriebenen Verfahren verrechnet und korrigiert, um die Achslasten zu identifizieren.

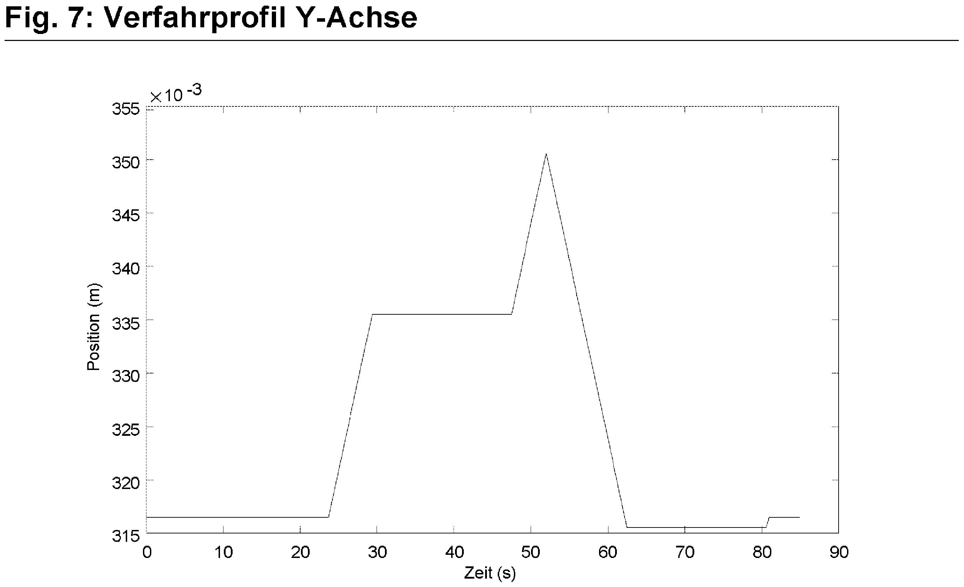

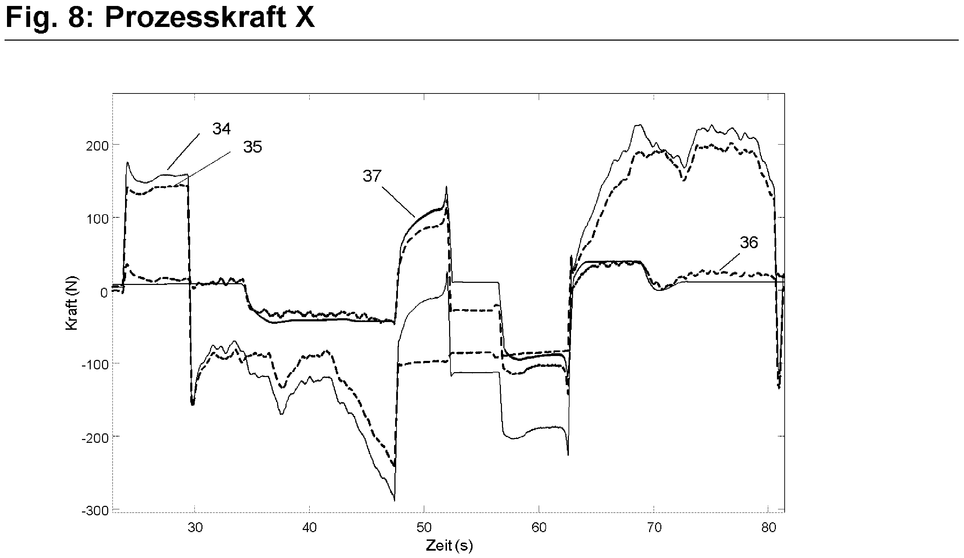

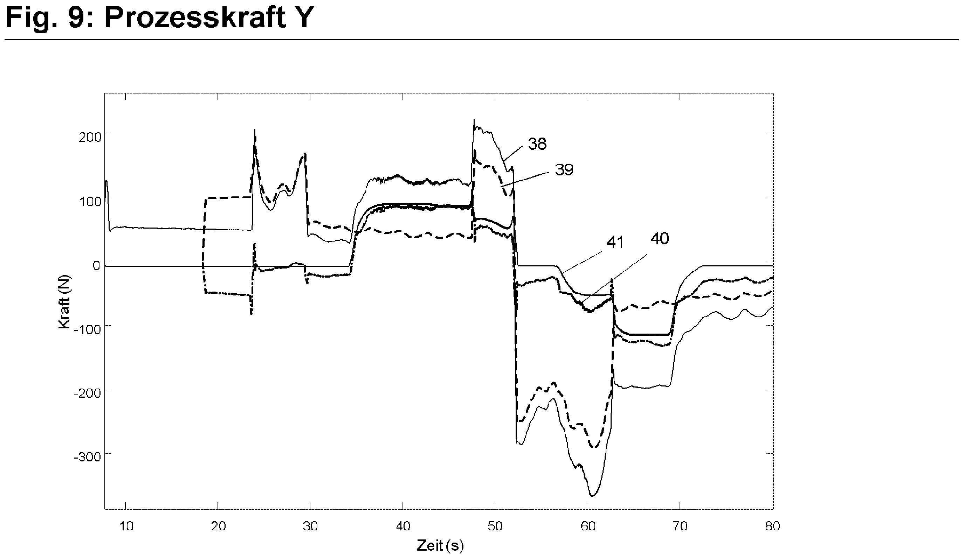

Fig. 6 zeigt das Verfahrprofil der X-Achse und Fig. 7 das Verfahrprofil der Y-Achse. Fig. 8 und 9 stellen diese Achslasten in X und Y Richtung dar. Die Achslast in X-Richtung ist mit der Kurve 34 (Fig. 8) und in Y-Richtung mit der Kurve 38 (Fig. 9) angegeben.

Die Prozesskräfte 37 und 41 können auf Basis dieser Achslasten 34 und 38 mit Hilfe geeigneter, an sich bekannter Reibungs-, Inertialkraft- und Kinematikmodellen des Maschinensystems ermittelt werden.

Vereinfacht können die resultierenden Reibungs- und Inertialkräfte jedoch auch über einen Luftschnitt ermittelt werden, bei dem die Achslasten bei gleichem Verfahrprofil ohne einen Bearbeitungsprozess aufgenommen werden. Die entsprechenden Kurven 35 und 39 sind in den Fig. 8 und 9 angegeben. Die zu erwartende Prozesskraft, dargestellt durch die Kurven 36 und 40, ergibt sich dann aus der Differenz der identifizierten Achslasten 34, 38 mit Bearbeitungsprozess und der identifizierten Achslasten 35, 39 ohne Bearbeitungsprozess.

Mit dem beschriebenen Verfahren ist es in einfacher Weise möglich, auf eine Linearachse 2 mit Kugelgewindetrieb 12, 13 wirkende externe Lasten 17 zu identifizieren. In der beschriebenen Weise wird zunächst der Kennwert $\Delta x$ aus den Signalen des direkten Positionsmesssystems 11 und des indirekten Positionsmesssystems 9 gebildet. Dieser Kennwert $\Delta x$ wird mit der positionsabhängigen Steifigkeit $k(x_{Pos})$ der Kinematik, die zwischen den beiden Messstellen 9, 11 liegt, multipliziert. Die Kinematik wird durch die Kugelrollspindel 12, die Spindelmutter 13, die Lagerung, die Kupplung 10 und dergleichen bestimmt. Durch die Multiplikation des Kennwertes $\Delta x$ mit der positionsabhängigen Steifigkeit $k(x_{Pos})$ der Kinematik kann die Achslast 17 ermittelt werden. Ausgehend von diesen Lasten, die auf die Linearachsen einer Werkzeugmaschine wirken, lässt sich durch geeignete Ansätze die Prozesskraft am Tool Center Point bestimmen. Die Ermittlung der Positionsdaten des direkten Positionsmesssystems 11 und des indirekten Positionsmesssystems 9 kann in der Regel durch Abgreifen analoger Signale direkt am jeweiligen Positionsmesssystem 9, 11 erfolgen. Diese Lösung ist nicht mit aufwändigen softwaretechnischen Lösungen zur Anbindung an ein Bussystem der Werkzeugmaschine verbunden. Besonders vorteilhaft ist, dass dieses Verfahren unabhängig vom Steuerungs- bzw. Regelungshersteller ist. Die beschriebene Ermittlung der Kräfte weist eine deutlich höhere Genauigkeit auf als die bestehenden Lösungen mit maschineninternen Daten.

**Patentansprüche**

**1.** Verfahren zur Bestimmung einer auf eine Linear- oder Rundachse mit einem direkten Positionsmesssystem (9) und einem indirekten Positionsmesssystem (11) wirkenden Achslast (17), wobei die Linear- oder Rundachse über eine Antriebskinematik mit Antriebsmotor angetrieben werden und mit den zwei Positionmesssystemen (9, 11) die Position der Linear- oder Rundachse als Messgröße gemessen wird, **dadurch gekennzeichnet, dass** die Messgrößen beider Positionsmesssysteme (9, 11) zunächst auf dieselbe physikalische Einheit umgerechnet werden, und dass aus diesen beiden Messgrößen ein Differenzwert

$$\Delta x = MG_{direktMS} - MG_{indirektMS} \cdot UF$$

gebildet wird,
wobei bedeutet:

$MG_{direktMS}$ = Messgröße des direkten Positionsmesssystems
$MG_{indirektMS}$ = Messgröße des indirekten Positionsmesssystems
$UF$ = Umrechnungsfaktor

und dass der Differenzwert ($\Delta x$) mit einem Kennwert ($k(x_{Pos})$) nach der Beziehung

$$F_{Achslast} = \Delta x \cdot k(x_{Pos})$$

verknüpft wird, der eine positionsabhängige Steifigkeit der Antriebskinematik (4, 10, 12) zwischen den beiden Messstellen der Positionsmesssystemen (9, 11) charakterisiert, um die Achslast (17) zu bestimmen.

2. Verfahren nach Anspruch 1,
**dadurch gekennzeichnet, dass** geometrische und/oder thermische Einflüsse durch Korrekturwerte berücksichtigt werden nach der Beziehung

$$\Delta x_{korrigiert} = \Delta x + [Korrekturwert],$$

wobei in Abhängigkeit von der Position, der Verfahrrichtung oder der Zeit Korrekturwerte angewendet werden.

3. Verfahren nach Anspruch 2,
**dadurch gekennzeichnet, dass** ein Spiel in der Antriebskinematik (4, 10, 12) durch Aufnahme einer Referenzfahrt der Linear- oder Rundachse aufgenommen wird, und dass das Spiel als Korrekturwert bei der Bestimmung der Achslast (17) berücksichtigt wird.

4. Verfahren nach Anspruch 2 oder 3,
**dadurch gekennzeichnet, dass** Längenänderungen der Linear- oder Rundachse aufgrund thermischer Einflüsse durch Korrekturwerte bei der Bestimmung der Achslast (17) berücksichtigt werden, die in Zeitabständen angepasst werden.

5. Verfahren nach einem der Ansprüche 2 bis 4,
**dadurch gekennzeichnet, dass** bei einer Rundachse (12) zur Erfassung von Wegschwankungen ($v2\pi$-Fehler) eine Referenzfahrt durchgeführt wird, und dass aus den Wegschwankungen die Korrekturwerte über die Achspositionen ermittelt werden.

6. Verfahren nach einem der Ansprüche 1 bis 5,
**dadurch gekennzeichnet, dass** eine Prozesskraft aus der Achslast (17, 34, 38) mit Hilfe von Reibungs- und/oder Inertialkraft- und/oder Kinematikmodellen ermittelt wird.

7. Verfahren nach einem der Ansprüche 1 bis 6,
**dadurch gekennzeichnet, dass** aus der Achslast (17) die auf Maschinenelemente wirkenden Lasten bestimmt werden.

8. Verfahren nach einem der Ansprüche 1 bis 7,
**dadurch gekennzeichnet, dass** die Achslasten während eines Bearbeitungsprozesses und ohne einen Bearbeitungsprozess bei gleichem Verfahrensprofil des Werkzeuges ermittelt werden, und das aus der Differenz der ermittelten Achslasten (17, 34, 38, 35, 39) die Prozesskraft (37, 41) bestimmt wird.

9. Verfahren nach einem der Ansprüche 1 bis 8,
   **dadurch gekennzeichnet, dass** das eine Positionsmesssystem (11) ein lineares Wegmesssystem (20) ist.

10. Verfahren nach einem der Ansprüche 1 bis 9,
    **dadurch gekennzeichnet, dass** das andere Positionsmesssystem zur indirekten Wegmessung verwendet wird.

11. Verfahren nach Anspruch 10,
    **dadurch gekennzeichnet, dass** das andere Positionsmesssystem (9) einen Drehgeber aufweist, der die Position einer Welle des Motors (3) erfasst.

12. Verfahren nach einem der Ansprüche 9 bis 11,
    **dadurch gekennzeichnet, dass** zur Ermittlung des Differenzwertes ($\Delta$x) die Differenz aus den beiden Messgrößen nach folgender Beziehung bestimmt wird:

$$\Delta x = x_{\text{direkt MS}} - \frac{\varphi \text{indirektes } MS}{2\pi} \cdot h_{\text{Steigung KGT}}$$

wobei bedeutet:

$\Delta$x Differenzwert in m
$x_{\text{direkt MS}}$ Messsignal des linearen Positionsmesssystems (11) in m
$\varphi_{\text{indirektes MS}}$ Messsignal des indirekten Positionsmesssystems (9) in rad
$h_{\text{Steigung KGT}}$ Steigung einer Kugelrollspindel (12) in m/Umdr

13. Verfahren nach einem der Ansprüche 1 bis 12, **dadurch gekennzeichnet, dass** eine Änderung der Steifigkeit ($k(x_{\text{Pos}})$) der Antriebskinematik (2, 3, 4) über deren Lebensdauer durch neues Einmessen oder durch Generierung von Verfahrprofilen korrigiert wird.

**Claims**

1. Method for determining an axle load (17) acting on a linear or rotary axle, with a direct position measuring system (9), and an indirect position measuring system (11), wherein the linear or rotary axle is driven by way of drive kinematics with a drive motor, and the position of the linear or rotary axle is measured as a measurand with the two position measuring systems (9, 11),
   **characterised in that**, the measurands of the two position measuring systems (9, 11) are first converted to the same physical unit, and **in that**, from these two measurands a difference value:

$$\Delta x = MG_{\text{directMS}} - MG_{\text{indirectMS}} \bullet UF$$

is formed, where:

$MG_{\text{directMS}}$ = measurand of the direct position measuring system
$MG_{\text{indirectMS}}$ = measurand of the indirect position measuring system
UF = conversion factor
and **in that**, the difference value ($\Delta$x) is combined with a characteristic value ($k(x_{\text{Pos}})$) in accordance with the relationship:

$$F_{\text{axle load}} = \Delta x \bullet k(x_{\text{Pos}})$$

which characterises a position-dependent stiffness of the drive kinematics (4, 10, 12) between the two measuring points of the position measuring systems (9, 11) so as to determine the axle load (17).

2. Method according to Claim 1,
**characterised in that**, geometric and/or thermal influences are taken into account by means of correction values in accordance with the relationship:

$$\Delta x_{corrected} = \Delta x + [correction\ value],$$

wherein correction values are applied as function of the position, the direction of travel, or the time.

3. Method according to Claim 2,
**characterised in that**, a clearance in the drive kinematics (4, 10, 12) is recorded by recording a reference run of the linear or rotary axle, and **in that**, the clearance is taken into account as a correction value when determining the axle load (17).

4. Method according to Claim 2 or 3,
**characterised in that**, alterations in length of the linear or rotary axle due to thermal influences are taken into account by means of correction values when determining the axle load (17), which alterations are adjusted at time intervals.

5. Method according to one of the Claims 2 to 4,
**characterised in that** a reference run is executed on a rotary axle (12) to record path fluctuations (v2n error), and **in that**, the correction values are determined by way of the axle positions from the path fluctuations.

6. Method according to one of the Claims 1 to 5,
**characterised in that**, a process force is determined from the axle load (17, 34, 38) with the aid of models of friction, and/or inertial force, and/or kinematics.

7. Method according to one of the Claims 1 to 6,
**characterised in that**, the loads acting on machine elements are determined from the axle load (17).

8. Method according to one of the Claims 1 to 7,

**characterised in that**, the axle loads are determined during a machining process, and without a machining process with the same travel profile of the tool,
and **in that**, the process force (37, 41) is determined from the difference between the determined axle loads (17, 34, 38, 35, 39).

9. Method according to one of the Claims 1 to 8,
**characterised in that**, the one position measuring system (11) is a linear path measuring system (20).

10. Method according to one of the Claims 1 to 9,
**characterised in that**, the other position measuring system is used for indirect path measurement.

11. Method according to Claim 10,
**characterised in that**, the other position measuring system (9) has a rotary encoder, which records the position of a shaft of the motor (3).

12. Method according to one of the Claims 9 to 11,
**characterised in that**, to determine the difference value ($\Delta x$), the difference between the two measurands, is determined in accordance with the following relationship:

$$\Delta x = x_{direct\ MS} - (\varphi_{indirect\ MS}/2\pi) \cdot h_{pitch\ KGT}$$

where:

$\Delta x$ difference value in m
$x_{direct\ MS}$ measured signal of the linear position measuring system (11) in m

$\varphi_{\text{indirect MS}}$ measured signal of the indirect position measuring system (9) in rad
$h_{\text{pitch KGT}}$ pitch of a ball screw (12) in m/rev.

**13.** Method according to one of the Claims 1 to 12, **characterised in that**, an alteration in the stiffness ($k(x_{\text{Pos}})$) of the drive kinematics (2, 3, 4) over its service life is corrected by means of a recalibration, or by the generation of travel profiles.

**Revendications**

**1.** Procédé de détermination d'une charge axiale (17) agissant sur un axe linéaire ou rotatif avec un système de mesure de position direct (9) et un système de mesure de position indirect (11), sachant que l'axe linéaire ou rotatif sont entraînés par une cinématique d'entraînement avec un moteur d'entraînement et que la position de l'axe linéaire ou rotatif est mesurée en tant que grandeur de mesure avec les deux systèmes de mesure de position (9, 11), **caractérisé en ce que** les grandeurs de mesure des deux systèmes de mesure de position (9, 11) sont converties d'abord dans la même unité physique et **en ce qu'**à partir de ces deux grandeurs de mesure, une valeur de différence

$$\Delta x = MG_{\text{SMdirect}} - MG_{\text{SMindirect}} \cdot UF$$

est formée,

> sachant que
> $MG_{\text{SMdirect}}$ = grandeur de mesure du système de mesure de position direct
> $MG_{\text{SMindirect}}$ = grandeur de mesure du système de mesure de position indirect
> UF = facteur de conversion
> et **en ce que** la valeur différentielle ($\Delta x$) est liée à une valeur caractéristique ($k(X_{\text{Pos}})$) d'après l'equation

$$F_{\text{charge axiale}} = \Delta x \cdot k(X_{\text{Pos}})$$

qui caractérise une rigidité de la cinématique d'entraînement, fonction de la position (4, 10, 12) entre les deux points de mesure des systèmes de mesure de position (9, 11) pour déterminer la charge axiale (17).

**2.** Procédé selon la revendication 1,

> **caractérisé en ce que** des effets géométriques et/ou thermiques sont pris en considération par des valeurs de correction selon l'equation $\Delta x_{\text{corrigé}} = \Delta x + $ [Valeur de correction],
> sachant que des valeurs de correction sont utilisées en fonction de la position, du sens de déplacement ou du temps.

**3.** Procédé selon la revendication 2,
**caractérisé en ce qu'**un jeu dans la cinématique d'entraînement (4, 10, 12) est enregistré par enregistrement d'une course de référence de l'axe linéaire ou rotatif et **en ce que** le jeu est pris en considération en tant que valeur de correction lors de la détermination de la charge axiale (17).

**4.** Procédé selon la revendication 2 ou 3,
**caractérisé en ce que** des variations de longueur de l'axe linéaire ou rotatif en raison d'effets thermiques sont prises en considération par des valeurs de correction lors de la détermination de la charge axial (17), qui sont adaptées en intervalles de temps.

**5.** Procédé selon l'une quelconque des revendications 2 à 4, **caractérisé en ce que** pour un axe rotatif (12), une course de référence est exécutée pour saisir des variations de course (erreur v2$\pi$) et **en ce que** les valeurs de correction sur les positions axiales sont déterminées à partir des variations de trajectoire.

**6.** Procédé selon l'une quelconque des revendications 1 à 5, **caractérisé en ce qu'**une force de processus émanant de la charge axiale (17, 34, 38) est déterminée à l'aide des modèles de frottement et/ou d'inertie et/ou de cinématique.

7. Procédé selon l'une quelconque des revendications 1 à 6, **caractérisé en ce que** les charges agissant sur les éléments de machine en raison de la charge axiale (17) sont déterminées.

8. Procédé selon l'une quelconque des revendications 1 à 7, **caractérisé en ce que** les charges axiales sont déterminées pendant un processus d'usinage et sans un processus d'usinage pour un profil de déplacement identique de l'outil et **en ce que** la force de processus (37, 41) est déterminée à partir de la différence des charges axiales déterminées (17, 34, 38, 35, 39).

9. Procédé selon l'une quelconque des revendications 1 à 8, **caractérisé en ce qu'**un système de mesure de position (11) est un système de mesure de course linéaire (20).

10. Procédé selon l'une quelconque des revendications 1 à 9, **caractérisé en ce que** l'autre système de mesure de position est utilisé pour la mesure de course indirecte.

11. Procédé selon la revendication 10,
**caractérisé en ce que** l'autre système de mesure de position (9) comporte un capteur rotatif, qui saisit la position d'un arbre du moteur (3).

12. Procédé selon l'une quelconque des revendications 9 à 11, **caractérisé en ce que** pour déterminer la valeur de différence ($\Delta$x), la différence entre les deux grandeurs de mesure est déterminée selon l'équation suivant :

$$\Delta x = x_{directSM} - \phi_{indirectSM}/2\pi \cdot h_{pasKGT}$$

sachant que

$\Delta$x = valeur de différence
$X_{directSM}$ = signal de mesure du système de mesure de position linéaire (11) en m
$\phi_{indirectSM}$ = valeur de mesure du système de mesure de position indirect (9) en rad
$h_{pasKGT}$ = pas d'une broche filetée à billes en m/tr

13. Procédé selon l'une quelconque des revendications 1 à 12, **caractérisé en ce qu'**une modification de la rigidité ($k(x_{Pos})$) de la cinématique d'entraînement (2, 3, 4) est corrigée sur la durée de vie de celle-ci par une nouvelle mesure ou par génération de profils de déplacement.

# Fig.1: Aufbau der Linearachse

EP 3 542 234 B1

Fig. 2: Gemessene Steifigkeit für X- und Y-Achse

Fig. 3: Effekte des Spiels

$\times 10^{-6}$

$\Delta x$ (m)

8
6
4
2
0
-2
-4
-6

-0.150  -0.145  -0.140  -0.135  -0.130  -0.125  -0.120  -0.115

X-Position vom direkten Messsystem (m)

21

23

22

20

24

## Fig. 4: Spindelungenauigkeiten und v2π-Fehler bei Fahrt in positiver x-Richtung

# Fig. 5: Beispielwerkstück

EP 3 542 234 B1

# Fig. 6: Verfahrprofil X-Achse

EP 3 542 234 B1

Fig. 7: Verfahrprofil Y-Achse

Fig. 8: Prozesskraft X

# Fig. 9: Prozesskraft Y

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009054631 A1
- EP 2481941 A1